# EUROPÄISCHE PATENTSCHRIFT

(11) **EP 1 596 064 B1**
(45) Veröffentlichungstag und Bekanntmachung des Hinweises auf die Patenterteilung: **14.10.2015**
(21) Anmeldenummer: 05009780.7
(22) Anmeldetag: 04.05.2005
(51) Int. Cl.: F03D 7/00, F03D 11/00

(54) **Blattverstellsystem für Windenergieanlage**
Blade pitch adjustment system for wind turbine
Dispositif de réglage du pas de l'hélice pour turbine éolienne

(30) Priorität: 11.05.2004 DE 102004023773
(43) Veröffentlichungstag der Anmeldung: 16.11.2005
(73) Patentinhaber: Senvion GmbH, 22297 Hamburg (DE)
(72) Erfinder: Schubert, Matthias, 24768 Rendsburg (DE)
(74) Vertreter: Hausfeld, Norbert

(56) Entgegenhaltungen:
- WO-A1-99/23384
- WO-A1-03/019004
- WO-A1-03/064854
- DE-A1- 3 045 499
- DE-C1- 19 634 059

## Beschreibung

Die Erfindung betrifft eine Windenergieanlage mit mindestens einem Blattverstellsystem.

Bei bekannten Windenergieanlagen wird ein Rotorblatt mit einem Blattlager drehbar an einer Rotornabe befestigt. Das Blattverstellsystem verfügt über mindestens einen Blattverstellantrieb mit einem Antriebsritzel, einer Getriebeeinheit und einem elektrischen oder hydraulischen Antriebsmotor. Das Antriebsritzel kämmt mit dem innen- oder außenverzahnten Blattlager.

Bei diesen Systemen stellen sich einige technisch nur schwer miteinander in Einklang zu bringende Anforderungen:
Um die Belastungen auf die nachfolgende Struktur zu minimieren, sollen Rotornabe und Blattverstellung ein minimales Gewicht und geringen Herstellungsaufwand aufweisen.

Im Widerspruch hierzu erfordert das Blattlager eine sehr steife Anschlusskonstruktion, da Verformungen der Anschlussflansche zu einer Reduzierung der Lagerlebensdauer führen.

Zusätzlich soll das Blattverstellsystem mit möglichst wenig Aufwand ein möglichst großes Blattverstellmoment zur Verfügung stellen, was dafür spricht, die Antriebsritzel möglichst weit außen (von der Blattachse weg) zu positionieren (langer Hebelarm).

Weiterhin handelt es sich bei dem Blattverstellsystem um komplizierte Antriebstechnik, die in der Vergangenheit bevorzugt geschützt innerhalb der Rotornabe untergebracht wird.

Daher ist die weitverbreitete Lösung, den Außenring des Blattlagers mit der Rotornabe zu verschrauben und den Innenring mit einer Innenverzahnung zu versehen und mit dem Rotorblatt zu koppeln. Die Verstellantriebe befinden sich dann innerhalb der Nabe. Sehr nachteilig ist jedoch, dass die Rotornabe durch den großen Flanschdurchmesser des Lageraußenrings schwer und wenig steif ist, sowie dass die Verstellantriebe durch den geringeren Hebelarm weniger Verstellmoment als bei einer Außenverzahnung aufbringen können.

Durch Umkehrung der Blattlagerverbindung (Innenring mit der Nabe, Außenring mit dem Blatt verschraubt) ist es im Stand der Technik gelungen, kompaktere und somit steifere Naben zu bauen, die allerdings ihrerseits dann wieder räumliche Probleme bezüglich der Anordnung der Blattverstellantriebe aufwerfen. Im Nabeninneren steht kein ausreichender Platz mehr zur Verfügung, und auch außerhalb der Nabe sind die räumlichen Gegebenheiten derart begrenzt, dass die Antriebe in der Regel so montiert werden, dass sie entweder bezogen auf das Antriebsritzel nach außen zeigen (wie die Rotorblätter), oder dass die Antriebsritzel mittig auf der der Gondel abgewandten Seite der Nabe (mittig vor den Blattflanschen der Nabe) angeordnet sind.

Aus Platzgründen werden dort dann Winkelantriebe eingesetzt, d.h. die Drehachsen von Antriebsritzel und Antriebsmotor liegen in einem Winkel größer 45°, in der Regel 90° zueinander. Ein derartiges System wird z.B. in der Offenlegungsschrift DE 101 41 667 A1 beschrieben. Die räumlichen Verhältnisse sind dann jedoch so beengt, das der zu Wartungszwecken erforderliche Zugang zum Inneren der Rotornabe und den Rotorblättern über sogenannte Blattextender (rohrförmige Bauteile mit einer Zugangsöffnung) erfolgen muss. Blattextender verursachen jedoch erhebliche Zusatzmasse und Kosten.

Die DE 30 45 499 A1 beschreibt eine Windenergieanlage mit einem Turm, einer auf dem Turm drehbar angeordneten Gondel, einem an der Gondel um eine Rotordrehachse drehbaren Rotor, der eine Rotornabe und mindestens ein Rotorblatt umfasst, das über ein Blattlager um eine Blattverstellachse drehbar mit der Rotornabe gekoppelt ist, wobei das Blattlager einen Innenring aufweist, der fest mit der Rotornabe verbunden ist sowie einen, eine Außenverzahnung aufweisenden Außenring, der fest mit dem Rotorblatt verbunden ist, und das Rotorblatt über einen Blattverstellantrieb drehbar ist, der einen Antriebsmotor aufweist, der ein, mit der Außenverzahnung des Außenrings in Eingriff stehendes Antriebsritzel antreibt, wobei das Antriebsritzel auf der gondelabgewandten Seite der Rotornabe in einem, um die Blattverstellachse gemessenen Winkel von 10° bis 30° zu einer durch die Rotordrehachse und die Blattverstellachse aufgespannten Ebene angeordnet ist, und dass der Antriebsmotor in einem Abstand zu der Rotordrehachse angeordnet ist, der kleiner als der Abstand zwischen dem Antriebsritzel und der Rotordrehachse ist, wobei zwischen den Blattverstellantrieben eine Zugangsöffnung zur Rotornabe verbleibt. Der Blattverstellantrieb ist mit einer Getriebeeinheit versehen, wobei die Drehachsen von Getriebeeinheit und Antriebsritzel koaxial angeordnet sind.

Aufgabe der Erfindung ist es daher, die Nachteile im Stand der Technik zu vermeiden und eine besonders wirtschaftliche Anordnung von Rotornabe, Blattlager, Rotorblatt und Verstellantrieb zu ersinnen, welche mit minimalem Materialaufwand eine gleichzeitig steife und kompakte Konstruktion mit großem Blattverstellmoment ermöglicht. Insbesondere soll die räumliche Anordnung so gewählt werden, dass der direkte Zugang zur Nabe ermöglicht wird.

Gelöst wird diese Aufgabe durch die erfindungsgemäße Anordnung gemäß Anspruch 1. Kernpunkt der Erfindung ist hierbei die Erkenntnis, dass es durch eine Modifikation des vorderen Teils der Nabenkontur möglich ist, die Blattverstellantriebe etwa 10° bis 30°, besonders vorteilhaft 14° - 22° aus der üblichen gondelabgewandten Mittelposition heraus zu drehen, d. h. dass das Antriebsritzel auf der gondelabgewandten Seite der Rotornabe in einem, um die Blattverstellachse gemessenen Winkel von 10°- 30° zu einer durch die Rotordrehachse und die Blattverstellachse aufgespannten Ebene angeordnet ist.

Weiterhin zeigen die Verstellantrieb nach innen, d.h. dass der Antriebsmotor in einem Abstand zu der Rotordrehachse angeordnet ist, der kleiner als der Abstand zwischen dem Antriebsritzel und der Rotordrehachse ist. Dies vermeidet den Hauptnachteil der erhöhten Blitzeinschlaggefährdung von nach außen zeigenden Verstellantrieben durch die erfindungsgemäße Anordnung direkt vor der (metallischen) Rotornabe.

Die hierzu erforderliche Nabengeometrie kann im vorderen Bereich sogar beulenförmige Einbuchtungen aufweisen. Es hat sich jedoch entgegen aller Konstruktionserfahrungen gezeigt, dass diese strukturell ungünstige Formgebung nur zu einem vernachlässigbaren Mehrgewicht führt, welches durch die vorteilhafte Anordnung der Antriebe vollkommen aufgewogen wird.

Durch das Herausdrehen aus der Mittelposition wird es im günstigsten Fall möglich, sogar koaxiale Blattverstellantriebe einzusetzen, d.h. Antriebsritzel, Getriebeeinheit und Antriebsmotor haben im wesentlichen eine gemeinsame Symmetrieachse. Bei engen Raumverhältnissen ist es jedoch weiterhin erforderlich, Winkelantriebe zu verwenden, die aber so angeordnet werden können, dass zu Wartungszwecken ein einfacher Zugang zum Nabeninneren durch die vordere (gondelabgewandte) Zugangsöffnung ermöglicht wird. Insbesondere kann so auf zusätzliche, schwere und teure Blattextender verzichtet werden. Die für die Blattlager günstige, versteifende Wirkung der Blattextender kann durch eine geeignete Nabengeometrie, besonders vorteilhaft durch eine Blattflanschversteifung, übernommen werden. Insbesondere ermöglicht die erfindungsgemäße Ausführung im Fall der gebräuchlichen Windrotoren mit drei Rotorblättern, die Antriebe in Form eines gleichseitigen Dreiecks anzuordnen, ohne dass der Zugang durch die Zugangsöffnung beschränkt wird.

Vorteilhafte Ausführungsfonnen der Erfindung werden anhand nachstehender Zeichnungen erläutert:
Figur 1: Seitenansicht eines erfindungsgemäßen Blattverstellsystems
Figur 2: Vorderansicht des Systems aus Fig. 1
Figur 3: Vorderansicht eines weiteren erfindungsgemäßen Blattverstellsystems
Figur 4: Draufsicht des Systems aus Fig. 3

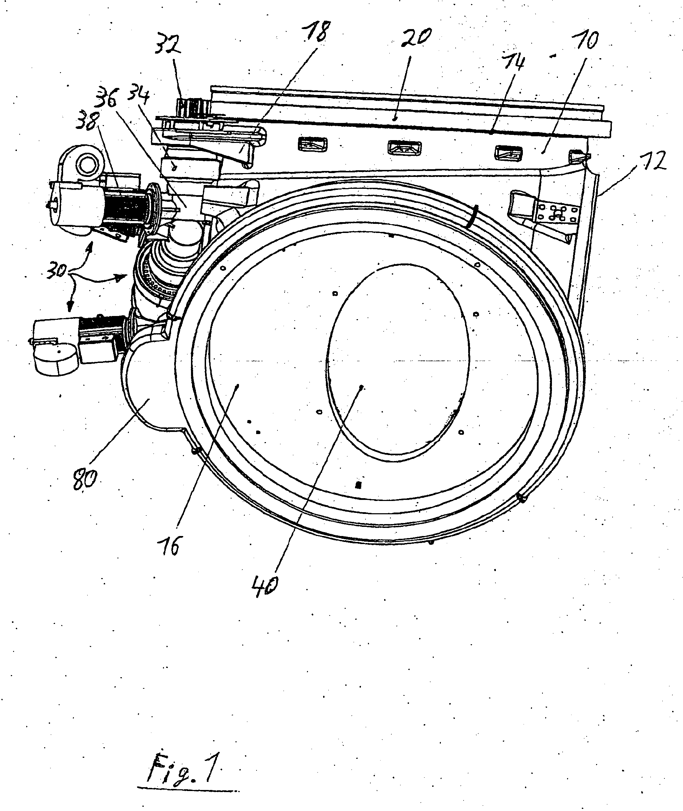

Figur 1 zeigt die Seitenansicht einer Rotornabe (10) mit (insgesamt drei) Blattverstellsystemen mit je einem Blattverstellantrieb (30) einer erfindungsgemäßen Windenergieanlage, Der Wellenflansch (12) dient zum Anschluss an einer in der Gondel gelagerten Rotorwelle. Auf dem Blattflansch (14) ist ein Blattlager (20) montiert. Der von einer an die Nabe angegossenen Konsole (18) getragene Blattverstellantrieb (30) weist ein Antriebsritzel (32) auf, welches in der nicht dargestellten Außenverzahnung des Blattlagers (20) kämmt. Weiterhin weist der gezeigte Blattverstellantrieb eine zum Antriebsritzel koaxiale Planetengetriebeeinheit (34) sowie ein Winkelgetriebe (36) und einen Antriebsmotor (38) auf. In dem unteren Teil der Nabe (10) ist eine Blattflanschversteifung (16) mit einem hier elliptisch ausgeführten Mannloch (40) dargestellt. Letzteres ermöglicht dem Wartungspersonal den Zugang von dem Inneren der Rotornabe (10) in das (nicht dargestellte) Rotorblatt. Die Blattflanschversteifung (16) ist in der dargestellten Ausführungsform einstückig mit der Rotornabe gefertigt, es sind aber auch zweistückige Ausführungen möglich. Diese Versteifung ist von entscheidender Wichtigkeit, um bei einer erfindungsgemäßen Nabe ausreichende Steifigkeit bei minimalem Gewicht zu ermöglichen.

Weiterhin ist mit (80) am unteren Blattflansch eine Ritzelabdeckung bezeichnet. In der gezeigten, vorteilhaften Ausführungsform ist das Antriebsritzel um etwa 15° aus der gondelabgewandten Mittelposition herausgedreht.

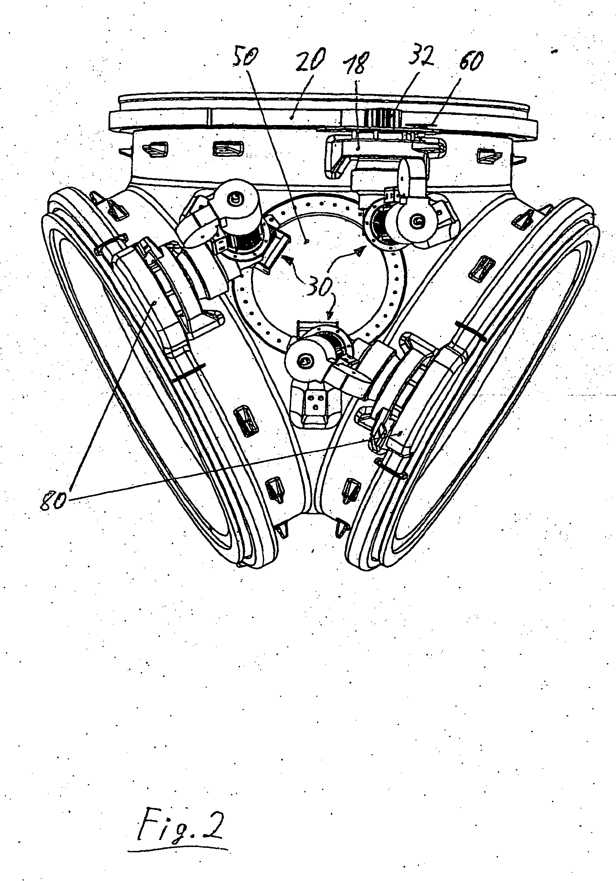

Figur 2 zeigt die mit gleichen Bezeichnungen versehene Vorderansicht des Systems aus Fig. 1. Mittig in der Nabe befindet sich die Zugangsöffnung (50), um die herum die drei Blattverstellantriebe (30) in Form eines gleichseitigen Dreiecks positioniert sind. Weiterhin ist neben dem oberen Antriebsritzel (32) ein Winkelgeber (60) zu erkennen, der zur genauen Erfassung des aktuellen Blattwinkels dient. Antriebsritzel (32) und Winkelgeber (60) befinden sich in einer vorteilhaften Ausführungsform unter einer gemeinsamen Abdeckung (80), um sie vor Fremdeinwirkung und Verschmutzung zu schützen.

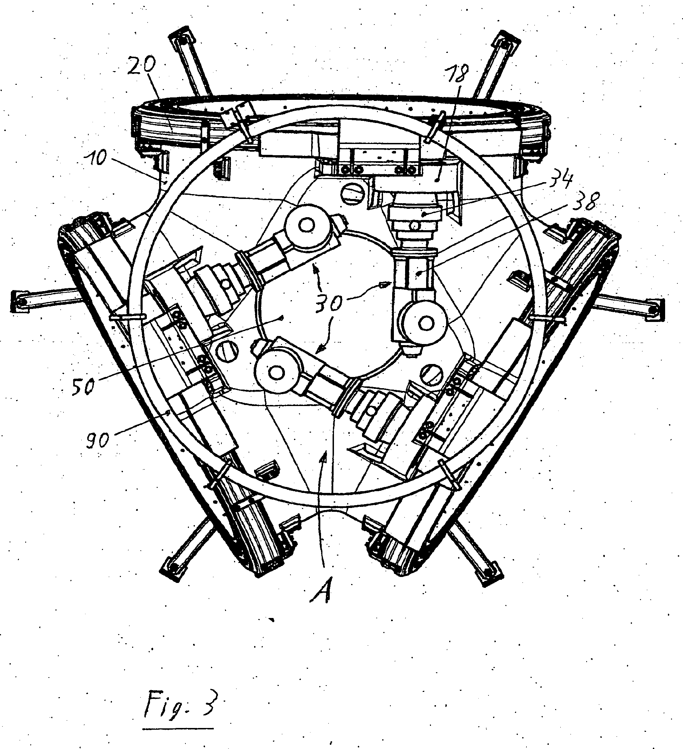

Figur 3 zeigt die Vorderansicht einer Rotornabe (10) einer weiteren vorteilhaften Ausführungsform einer erfindungsgemäßen Windenergieanlage

Abweichend zur Ausführungsform der Figuren 1 u. 2 kann in dieser Ausführungsform auf vorteilhafte Weise auf ein Winkelgetriebe in den Blattverstellantrieben (30) verzichtet werden, indem die Verstellantriebe in koaxialer Bauweise ausgeführt sind, d.h. Antriebsritzel, Planetengetriebeeinheit (34) und Antriebsmotor (38) sind axial fluchtend angeordnet. Dies wird durch eine besondere, vorne eingebeult erscheinende Nabengeometrie ermöglicht, welche es gestattet, die Antriebsritzel um 20° aus der gondelabgewandten Mittelposition herausgedreht zu positionieren. Der eingebeult erscheinende, in zweidimensionalen Zeichnungen nur schwer darstellbare Bereich ist mit (A) gekennzeichnet, und schafft den erforderlichen Einbauraum für den Verstellantrieb (30). Diese Geometrie findet sich entsprechend bei jedem der drei Verstellantriebe wieder. Somit kommt es zu der charakteristischen Anordnung der Verstellantriebe in Form eines gleichschenkligen Dreiecks um die Zugangsöffnung (50) herum.

Weiterhin ist mit 90 ein geerdeter Tragring bezeichnet, welcher räumlich vor den Blattverstellantrieben befestigt ist, und einerseits die Antriebe vor mechanischen Belastungen und Blitzschlag schützt, andererseits auch zur Befestigung der nicht dargestellten Nabenverkleidung (Spinner) dient.

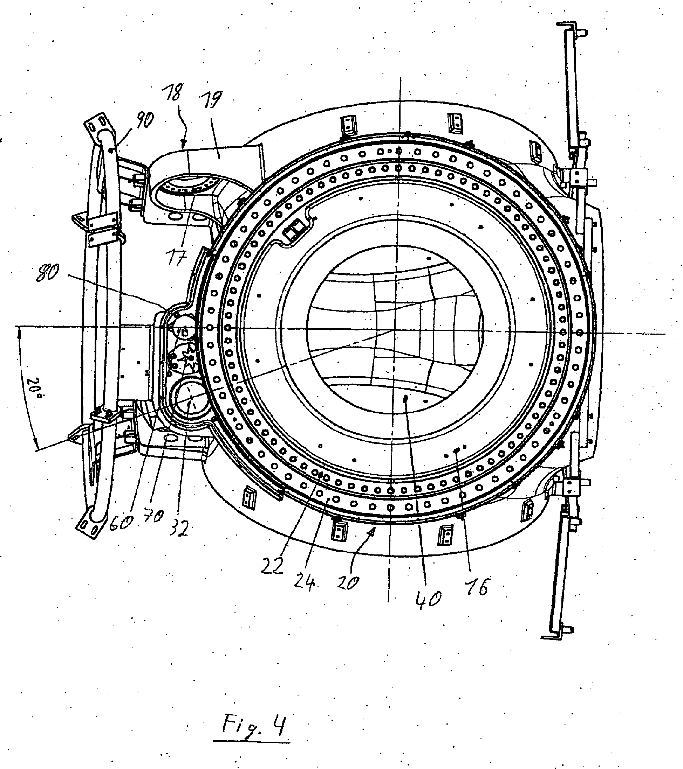

Figur 4 zeigt die Draufsicht der Ausführung nach Fig. 3.

Hier ist das Blattlager (20) mit dem nabenfest verschraubten Innenring (22) sowie dem blattfest verschraubten Außenring (24) gezeigt. Weiterhin ist die gegenüber der gondelabgewandten Mittelposition um 20° herausgedrehte Position des Antriebsritzels (32) dargestellt. Neben dem Antriebsritzel (32) befindet sich ein zur kontinuierlichen Auftragung von Schmierstoff geeignetes Schmierritzel (70) sowie ein Winkelgeber (60). In einer vorteilhaften Ausführungsform befinden sich Antriebsritzel (32), Schmierritzel (70) und Winkelgeber (60) unter einer gemeinsamen Abdeckung (80), deren Deckel hier durchsichtig dargestellt ist. Eine ebenfalls vorteilhafte Ausführungsform sieht es auch vor, nur das Schmierritzel (70) und das Antriebsritzel (32) unter einer gemeinsamen Abdeckung anzuordnen. Dies bietet den Vorteil, dass der empfindliche Winkelgeber (60) nicht überschüssigem Schmierstoff ausgesetzt wird.

Dargestellt ist ebenfalls die umlaufende flanschförmige Versteifung des Blattflansches (16) mit dem hier kreisförmig ausgeführten Mannloch (40).

Im oberen Teil der Nabe (10) ist weiterhin durch Weglassen des dort vorgesehenen Verstellantriebs (30) eine vorteilhafte Ausführungsform der an die Nabe (10) angegossenen Konsole (18) gezeigt, welche aus einer Flanschfläche (17) zur Verschraubung des Verstellantriebs (30) mit einem umlaufenden Steg (19) besteht.

## Patentansprüche

1. Windenergieanlage mit einem Turm, einer auf dem Turm drehbar angeordneten Gondel, einem an der Gondel um eine Rotordrehachse drehbaren Rotor, der eine Rotornabe (10) und mindestens ein Rotorblatt umfasst, das über ein Blattlager (20) um eine Blattverstellachse drehbar mit der Rotornabe (10) gekoppelt ist, wobei das Blattlager (20) einen Innenring (22) aufweist, der fest mit der Rotornabe (10) verbunden ist sowie einen, eine Außenverzahnung aufweisenden Außenring (24), der fest mit dem Rotorblatt verbunden ist, und das Rotorblatt über ein Blattverstellantrieb (30) drehbar ist, der einen Antriebsmotor (3 8) aufweist, der ein, mit der Außenverzahnung des Außenrings (24) in Eingriff stehendes Antriebsritzel (32) antreibt, wobei das Antriebsritzel (32) auf der gondelabgewandten Seite der Rotornabe (10) in einem, um die Blattverstellachse gemessenen Winkel von 10°- 30° zu einer durch die Rotordrehachse und die Blattverstellachse aufgespannten Ebene angeordnet ist, und dass der Antriebsmotor (38) in einem Abstand zu der Rotordrehachse angeordnet ist, der kleiner als der Abstand zwischen dem Antriebsritzel (32) und der Rotordrehachse, wobei die Windenergieanlage über drei Blattverstellantriebe (30) verfügt, welche so angeordnet sind, dass zwischen den Blattverstellantrieben (30) eine Zugangsöffnung (50) zur Rotornabe (10) verbleibt wobei die Blattverstellantriebe (30) in Form eines gleichseitigen Dreiecks angeordnet sind.

2. Windenergieanlage nach Anspruch, 1 **dadurch gekennzeichnet, dass** sich die Drehachse des Antriebsmotors (38) im wesentlichen parallel oder koaxial zur Drehachse des Antriebsritzels (32) befindet.

3. Windenergieanlage nach Anspruch 1 oder 2, **dadurch gekennzeichnet, dass**, der Blattverstellantrieb (30) mit einer Planetengetriebeeinheit (34) versehen ist, wobei die Drehachsen von Planetengetriebeeinheit (34) und Antriebsritzel (32) koaxial angeordnet sind,

## Claims

1. A wind turbine with a tower, a nacelle arranged on the tower in a pivoting manner, a rotor at the nacelle that is pivotable about an axis of rotation of the rotor and comprises a rotor hub (10) and at least one rotor blade which is coupled to the rotor hub (10) via a blade bearing (20) such that it is pivotable about a blade pitch adjustment axis, wherein the blade bearing (20) comprises an inner ring (22) which is permanently connected to the rotor hub (10) as well as an outer ring (24) which comprises an outer tooth system and is permanently connected to the rotor blade and wherein the rotor blade is pivotable via a blade pitch adjustment drive (30) which comprises a drive motor (38) which drives a drive pinion (32) being in engagement with the outer tooth system of the outer ring (24), wherein the drive pinion (32) is arranged on the side of the rotor hub (10) facing away from the nacelle at an angle of 10 degrees to 30 degrees in relation to a plane spanned by the axis of rotation of the rotor and the blade pitch adjustment axis, said angle being measured about the blade pitch adjustment axis, and that the drive motor (38) is arranged at a distance from the axis of rotation of the rotor that is less than the distance between the drive pinion (32) and the axis of rotation of the rotor, wherein the wind turbine has three blade pitch adjustment drives (30) which are arranged in such a way that an opening (50) for access to the rotor hub (10) remains between the blade pitch adjustment drives (30), wherein the blade pitch adjustment drives (30) are arranged in the form of an equilateral triangle.

2. The wind turbine according to Claim 1, **characterised in that** the axis of rotation of the drive motor (38), in essence, extends in parallel or coaxially in relation to the axis of rotation of the drive pinion (32).

3. The wind turbine according to Claim 1 or 2, **characterised in that** the blade pitch adjustment drive (30) is provided with a planetary gear unit (34), wherein the axes of rotation of the planetary gear unit (34) and the drive pinion (32) are arranged coaxially.

## Revendications

1. Eolienne avec une tour, une nacelle placée sur la tour de façon à pouvoir pivoter, un rotor équipant la nacelle et pouvant tourner autour d'un axe de rotation, lequel rotor comprend un moyeu (10) et au moins une pale, laquelle est couplée au moyeu (10) du rotor par un palier (20) de façon à pouvoir pivoter autour d'un axe d'orientation de la pale, le palier (20) présentant une bague intérieure (22) qui fait corps avec le moyeu du rotor (10) ainsi qu'une bague extérieure (24) présentant un denture extérieure et faisant corps avec la pale de rotor et la pale de rotor pouvant pivoter au moyen d'un mécanisme d'orientation de pale (30) présentant un moteur de commande (38) entraînant un pignon de commande (32) en prise avec la denture extérieure de la bague extérieure (24), le pignon de commande (32) étant placé du côté du moyeu (10) du rotor opposé à la nacelle selon un angle, mesuré autour de l'axe d'orientation de la pale, de 10° à 30° par rapport à un plan passant par l'axe de rotation du rotor et l'axe d'orientation de la pale, le moteur de commande (38) étant placé à une distance de l'axe de rotation du rotor inférieure à la distance entre le pignon de commande (32) et l'axe de rotation du rotor, l'éolienne disposant de trois mécanismes d'orientation de pale (30) agencés de façon telle qu'entre les mécanismes d'orientation de pale est réservée une ouverture (50) d'accès au moyeu du rotor (10), les mécanismes d'orientation de pale (30) étant agencés en forme de triangle équilatéral.

2. Eolienne selon la revendication 1, **caractérisée en ce que** l'axe de rotation du moteur de commande (38) est essentiellement parallèle ou coaxial à l'axe de rotation du pignon de commande (32).

3. Eolienne selon la revendication 1 ou 2, **caractérisée en ce que** le mécanisme d'orientation de pale (30) est doté d'une unité d'engrenage planétaire (34), les axes de rotation de l'unité d'engrenage planétaire (34) et du pignon de commande (32) étant agencées coaxialement.
